# FASCICULE DE BREVET EUROPEEN

(11) **EP 2 860 592 B1**
(45) Date de publication et mention de la délivrance du brevet: **05.07.2023**
(21) Numéro de dépôt: 14184665.9
(22) Date de dépôt: 12.09.2014
(51) Int. Cl.: G04B 13/02

(54) **SYSTÈME D'ASSEMBLAGE UTILISANT UN ÉLÉMENT DE BLOCAGE ÉLASTIQUE PLAN**
MONTAGESYSTEM, BEI DEM EIN FLACHES ELASTISCHES BLOCKIERELEMENT VERWENDET WIRD
ASSEMBLY SYSTEM USING A PLANAR RESILIENT LOCKING MEMBER

(30) Priorité: 09.10.2013 EP 13187833
(43) Date de publication de la demande: 15.04.2015
(73) Titulaire: Nivarox-FAR S.A., 2400 Le Locle (CH)
(72) Inventeur: Stranczl, Marc, 1260 Nyon (CH); Mallet, Daniel, 25500 Le Bélieu (FR); Verardo, Marco, 2336 Les Bois (CH)
(74) Mandataire: Collé, Emmanuel

(56) Documents cités:
- EP-A1- 1 705 533
- EP-A1- 2 273 322
- CH-A2- 703 961

## Description

### Domaine de l'invention

L'invention se rapporte à un système d'assemblage utilisant un élément de blocage élastique sensiblement plan permettant l'assemblage d'une pièce dont le matériau ne comporte pas de domaine plastique utilisable, c'est-à-dire avec un domaine plastique très restreint, avec un organe comportant un autre type de matériau.

### Arrière-plan de l'invention

Les assemblages actuels comportant une pièce à base de silicium sont généralement solidarisés par collage. Une telle opération nécessite une extrême finesse d'application ce qui la rend coûteuse.

On connaît également dans l'état de la technique les documents EP1705533A1 et EP2273322A1 qui décrivent d'autres assemblages comportant une pièce, un organe comportant un axe et une portée, ainsi qu'un élément de blocage agencé pour attacher ladite pièce entre la portée dudit organe et cet élément de blocage.

### Résumé de l'invention

Le but de la présente invention est de pallier tout ou partie les inconvénients cités précédemment en proposant un assemblage sans colle capable de solidariser une pièce dont le matériau ne comporte pas de domaine plastique avec un organe comportant un matériau ductile comme, par exemple, un métal ou un alliage métallique

A cet effet, l'invention se rapporte à un système d'assemblage comportant un organe en au moins un premier matériau comportant un axe et une portée, l'axe de l'organe étant reçu dans l'ouverture d'une pièce en un deuxième matériau ne comportant pas ou peu de domaine plastique, le système d'assemblage comportant un seul élément de blocage élastique en un troisième matériau agencé pour attacher élastiquement la pièce entre la portée dudit organe et ledit un seul élément de blocage. Ledit un seul élément de blocage est une rondelle dont la paroi interne serre radialement l'axe dudit organe et dont la partie périphérique exerce une force axiale et élastique à l'aplomb de la portée dudit organe afin de rendre solidaire l'ensemble organe - pièce - élément de blocage, la solidarisation de l'ensemble organe - pièce - élément de blocage étant configurée pour exercer à l'aplomb de la portée de l'organe uniquement une force axiale et élastique par la partie périphérique de l'élément de blocage conjuguée au serrage radial de la paroi interne de cet élément de blocage contre l'axe de l'organe. L'élément de blocage comprend une surface n'excédant pas celle de la portée dudit organe.

Cette configuration permet avantageusement de solidariser l'ensemble organe - pièce - élément de blocage sans collage avec un organe habituel à la précision maîtrisée tout en garantissant que la pièce ne subisse pas d'efforts destructifs même si elle est formée, par exemple, à partir d'un matériau à base de silicium. En effet, la Demanderesse a été surpris de pouvoir solidariser l'ensemble organe - pièce - élément de blocage, notamment en rotation relative, avec une si grande simplicité structurelle car les préjugés de résistance mécanique des pièces notamment à partir de matériaux à base de silicium obligeaient jusqu'à maintenant à ne surtout pas fournir d'effort axial sur une pièce à base de matériau ne comportant pas ou peu de domaine plastique.

Conformément à d'autres caractéristiques avantageuses de l'invention :
- le troisième matériau comporte un métal ou un alliage métallique dont la résistance à la relaxation, après 10'000 heures à une température de 70°C, est au moins égale à 50% de la force appliquée représentant 75% de la contrainte nécessaire à obtenir 0,2% de déformation plastique du troisième matériau afin de maintenir la solidarisation de l'ensemble organe - pièce - élément de blocage ;
- le troisième matériau comporte du cuivre, du laiton, du maillechort, de l'alliage arcap, de l'alliage pfinodal, de l'alliage spinodal, de l'alliage durnico, de l'alliage durimphy, de l'alliage Cu-Be et/ou de l'acier 20AP ;
- le seul élément de blocage est chanfreiné afin d'éviter tout bris du deuxième matériau ;
- le deuxième matériau est à base de silicium ;
- le deuxième matériau comporte du silicium, du quartz, de l'oxyde de silicium, du nitrure de silicium ou carbure de silicium ;
- ledit au moins un premier matériau comporte un métal ou un alliage métallique ;
- l'axe et la portée sont venus de forme.

De plus, l'invention se rapporte à une pièce d'horlogerie caractérisée en ce qu'elle comporte au moins un système d'assemblage selon l'une des variantes précédentes, ladite pièce en un deuxième matériau est un mobile, une ancre ou un spiral.
Enfin, l'invention se rapporte à un procédé de fabrication d'un système d'assemblage selon la revendication 11 annexée.

Ce procédé permet avantageusement de rendre solidaire simplement, élastiquement et sans déplacement relatif possible, l'ensemble organe - pièce - élément de blocage. En effet, de manière avantageuse selon l'invention, seulement un élément de blocage est rapporté et déformé pour induire un pincement périphérique uniquement élastique. On comprend également qu'un tel procédé permet de solidariser l'ensemble organe - pièce - élément de blocage en s'adaptant aux dispersions de fabrication des différents constituants.

Enfin, de manière étonnante, l'effort axial exercé par la partie périphérique de l'élément de blocage lors du procédé n'engendre pas de bris du deuxième matériau à base de ne comportant pas ou peu de domaine plastique. Cet avantage technique permet de simplifier considérablement le montage de pièce ne comportant pas ou peu de domaine plastique sur un axe pivotant. On comprend notamment qu'il n'est pas nécessaire de prévoir de colle, de capot de verrouillage supplémentaire ou de formes complémentaires en recouvrement pour solidariser les pièces entre elles et, notamment, quant aux déplacements relatifs autour de l'axe de rotation de l'axe pivotant.

Conformément à d'autres caractéristiques avantageuses de l'invention :
- l'étape d) de la revendication 11 annexée est arrêtée lorsque la force appliquée par ledit outil est comprise entre 20% et 90% de la contrainte de limite élastique du troisième matériau ;
- le troisième matériau comporte un métal ou un alliage métallique dont la résistance à la relaxation, après 10'000 heures à une température de 70°C, est au moins égale à 50% de la force appliquée lors de l'étape d) représentant 75% de la contrainte nécessaire à obtenir 0,2% de déformation plastique du troisième matériau afin de maintenir la solidarisation de l'ensemble organe - pièce - élément de blocage ;
- le troisième matériau comporte du cuivre, du laiton, du maillechort, de l'alliage arcap, de l'alliage pfinodal, de l'alliage spinodal, de l'alliage durnico, de l'alliage durimphy, de l'alliage Cu-Be et/ou de l'acier 20AP ;
- ledit un seul élément de blocage est chanfreiné afin d'éviter tout bris du deuxième matériau ;
- le deuxième matériau est à base de silicium ;
- le deuxième matériau comporte du silicium, du quartz, de l'oxyde de silicium, du nitrure de silicium ou carbure de silicium ;
- ledit au moins premier matériau comporte un métal ou un alliage métallique ;
- la pièce est un mobile d'horlogerie ;
- la pièce est une ancre d'horlogerie ;
- la pièce est un spiral d'horlogerie.

### Description sommaire des dessins

D'autres particularités et avantages ressortiront clairement de la description qui en est faite ci-après, à titre indicatif et nullement limitatif, en référence aux dessins annexés, dans lesquels :
- la figure 1 est une vue en perspective d'un élément de blocage selon l'invention ;
- la figure 2 est une vue en coupe selon un plan axial d'un élément de blocage de la figure 1 ;
- la figure 3 est une représentation graphique de la force appliquée lors du procédé en fonction de la position axiale de l'outil exerçant ladite force ;
- les figures 4 à 8 sont des vues schématiques en coupe d'étapes successives du procédé selon l'invention ;
- les figures 9 et 10 sont des vues schématiques partielles d'un mouvement horloger comportant des systèmes d'assemblage selon l'invention.

### Description détaillée des modes de réalisation préférés

Comme expliqué ci-dessus, l'invention se rapporte à un système d'assemblage d'une pièce dont le matériau ne comporte pas de domaine plastique utilisable, c'est-à-dire avec un domaine plastique très restreint, avec un organe comportant un autre type de matériau.

Ce système d'assemblage a été imaginé pour des applications dans le domaine horloger. Toutefois, d'autres domaines peuvent parfaitement être imaginés comme notamment l'aéronautique, la bijouterie, l'automobile ou les arts de la table.

Dans le domaine horloger, cet assemblage est rendu nécessaire par la part croissante que tiennent les matériaux fragiles comme ceux à base de silicium tel que le silicium monocristallin (ou polycristallin) dopé ou non, l'oxyde de silicium comme du quartz ou de la silice, du corindon monocristallin ou polycristallin ou plus généralement de l'alumine, le nitrure de silicium et le carbure de silicium. On peut, à titre d'exemple, envisager de former le spiral, le balancier, l'ancre, les ponts ou même les mobiles comme les roues d'échappement totalement ou partiellement à base de matériaux fragiles.

Toutefois, le fait de toujours pouvoir utiliser des axes habituels en acier dont la fabrication est maîtrisée, est une contrainte qui est difficile à concilier avec l'utilisation de pièces ne comportant pas de domaine plastique. En effet, lors de tests effectués, le chassage d'un axe en acier est impossible et brise systématiquement les pièces fragiles, c'est-à-dire ne comportant pas de domaine plastique utilisable. Par exemple, il est apparu que le cisaillement généré par l'entrée de l'axe métallique dans l'ouverture d'une pièce en silicium brise systématique cette dernière.

C'est pourquoi, l'invention se rapporte à un système d'assemblage 1, 101, 121, 201 comportant un organe 3, 103, 123, 203 en au moins un premier matériau comportant un axe 2, 102, 112, 202 et une portée 4, l'axe 2 de l'organe étant reçu dans l'ouverture 6 d'une pièce 5, 105, 205 en un deuxième matériau ne comportant pas ou peu de domaine plastique.

On comprend donc que l'axe 2, 102, 122, 202 et la portée 4 peuvent être venus de forme à l'aide d'un unique premier matériau ou que l'axe 2, 102, 122, 202 et la portée 4 de l'organe 3, 103, 123, 203 peuvent être formés à partir de plusieurs matériaux et/ou plusieurs parties.

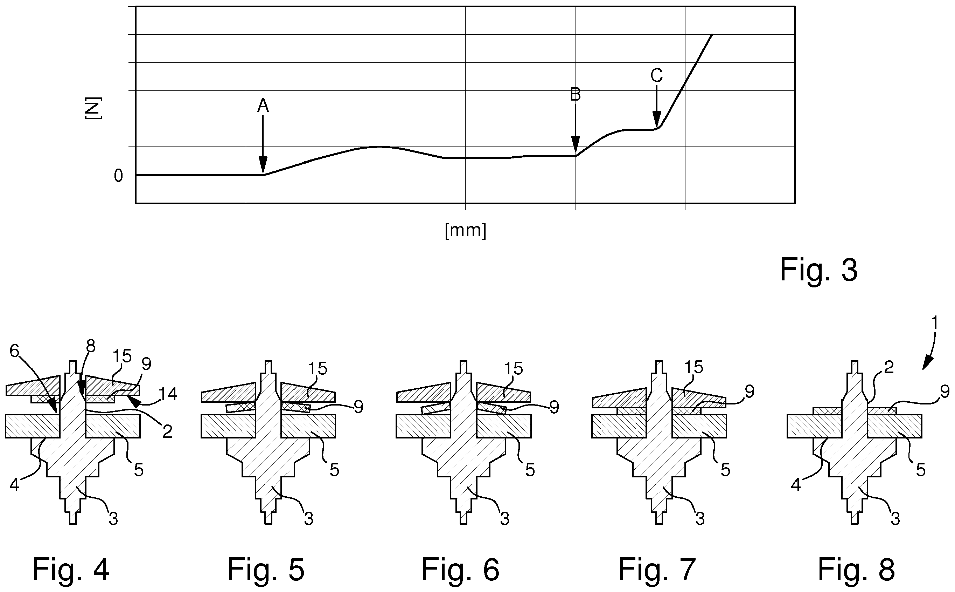

Avantageusement selon l'invention, le système d'assemblage 1, 101, 121, 201 comporte un élément de blocage 9, 109, 129, 209 en un troisième matériau agencé pour attacher élastiquement la pièce 5, 105, 205 entre la portée 4 de l'organe 3, 103, 123, 203 et l'élément de blocage 9, 109, 129, 209. Comme mieux visible à la figure 8, avantageusement selon l'invention, la pièce 5 est pincée contre la portée 4 de l'organe 3 par la force élastique de l'élément de blocage 9. On comprend immédiatement la simplicité du système d'assemblage 1, 101, 121, 201 selon l'invention qui ne nécessite pas de colle, de capot de verrouillage supplémentaire ou de formes complémentaires en recouvrement ou encore de déformation plastique comme du fluage.

Préférentiellement selon l'invention, l'élément de blocage 9, 109, 129, 209 est une rondelle dont la paroi interne 10 serre radialement l'axe 2, 102, 122, 202 de l'organe 3, 103, 123, 203 et dont la partie périphérique 13 exerce une force axiale et élastique à l'aplomb de la portée 4 de l'organe 3, 103, 123, 203 afin de rendre solidaire l'ensemble organe 3, 103, 113, 203 - pièce 5, 105, 205 - élément de blocage 9, 109, 129, 209.

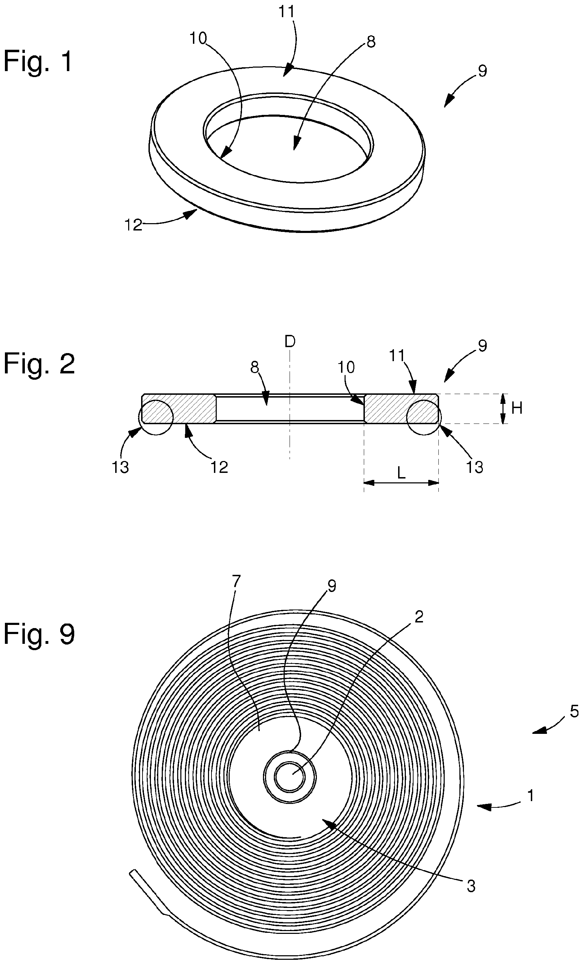

Aux figures 1 et 2, on peut également voir que l'élément de blocage 9, 109, 129, 209 comporte une surface supérieure 11 destinée à entrer en contact avec un outil préférentiellement plat 15 et une surface inférieure 12 destinée à entrer en contact avec la surface supérieure de la pièce 5, 105, 205.

En effet, comme expliqué ci-dessous, de manière étonnante, l'effort axial exercé par la partie périphérique 13 de l'élément de blocage 9, 109, 129, 209 lors du procédé n'engendre pas de bris du deuxième matériau ne comportant pas de domaine plastique. Cet avantage technique permet de simplifier considérablement le montage de pièce 5, 105, 205 sur un axe 2, 102, 122, 202, par exemple, pivotant. Cet avantage est notamment obtenu car la partie périphérique 13 de l'élément de blocage 9, 109, 129, 209 appuie sur la portée 4 et pas en porte-à-faux de la portée 4. Il est donc important que la surface de l'élément de blocage 9, 109, 129, 209 n'excède pas celle de la portée 4.

Dans l'exemple illustré aux figures 1 et 2, l'élément de blocage 9 est symétrique, c'est-à-dire que les surfaces 11 et 12 peuvent être indifféremment celle supérieure ou inférieure. Toutefois, cette symétrie n'est qu'optionnelle et appliquée préférentiellement pour éviter les erreurs de manipulation lors de la fabrication.

Le montage élastique de l'élément de blocage 9, 109, 129, 209 est avantageusement obtenu en utilisant un troisième matériau qui comporte un métal ou un alliage métallique dont la résistance à la relaxation est au moins égale à 50% de la force appliquée. Les tests permettant de déterminer ce pourcentage ont été effectués après 10'000 heures à une température de 70°C et sous une force de 75% de la contrainte nécessaire à obtenir 0,2% de déformation plastique, c'est-à-dire sensiblement 75% de la limite élastique du troisième matériau.

Cette résistance supérieure à 50% a été observée quand le troisième matériau comporte du cuivre, du laiton, du maillechort, de l'alliage arcap et même supérieure à 85% quand le troisième matériau comporte de l'alliage pfinodal, de l'alliage spinodal, de l'alliage durnico, de l'alliage durimphy, de l'alliage Cu-Be et de l'acier 20AP.

Pour des considérations propres à l'horlogerie, l'élément de blocage 9, 109, 129, 209 est, de manière encore plus préférée, choisi parmi les matériaux ci-dessus qui ne possèdent pas de propriétés ferromagnétiques afin d'être peu sensibles aux champs magnétiques, c'est-à-dire le cuivre, le laiton, le maillechort, l'alliage arcap, l'alliage pfinodal, l'alliage spinodal, l'alliage Cu-Be et l'alliage durimphy.

Comme mieux visible aux figures 1 et 2, préférentiellement selon l'invention, la section selon un plan de coupe axial de l'élément de blocage 9, 109, 129, 209 comporte un rapport (H/L) de la hauteur H par rapport à la largeur L compris entre 0,1 et 5. Ainsi, il est important de bien choisir la longueur L pour avoir une partie périphérique 13 suffisamment éloignée du centre de l'axe D pour obtenir un bras de levier suffisamment élevé pour offrir un pincement suffisant à la solidarisation. Dans le même temps, une hauteur H doit être également bien choisie pour avoir une hauteur minimale pour suffisamment protéger le deuxième matériau ne comportant pas ou peu de domaine plastique et une hauteur maximale pour toujours obtenir la déformation intermédiaire expliquée ci-dessous. On comprend donc que le rapport H/L doit être adapté suivant les applications prévues.

Selon une autre préférence, l'élément de blocage 9, 109, 129, 209 est chanfreiné afin d'éviter tout bris du deuxième matériau ne comportant pas ou peu de domaine plastique. En effet, comme expliqué ci-dessous suivant la géométrie de la déformation intermédiaire, un chanfrein peut éviter que l'élément de blocage 9, 109, 129, 209 entre en contact sur la surface supérieure de la pièce 5, 105, 205 par une arête vive propre à générer trop de contrainte et/ou de pression sur une surface minimale.

Ainsi, avantageusement selon l'invention, ledit au moins premier matériau formé pour l'organe 3, 103, 123, 203 peut comporter une grande variété de matériau comme, par exemple, un métal ou un alliage métallique.

Le procédé de fabrication d'un premier mode de réalisation de système d'assemblage 1 selon l'invention illustré à la figure 9 est expliqué ci-dessous en référence aux figures 3 à 8.

Le procédé comporte une première étape a) consistant à former chaque partie du système d'assemblage 1. Ainsi, l'étape a) comporte une phase destinée à former un organe 3 en au moins un premier matériau comportant un axe 2 et une portée 4 venus de forme ou non, une deuxième phase destinée à former une pièce 5 en deuxième matériau ne comportant pas ou peu de domaine plastique comme, par exemple, à base de silicium avec une ouverture 6 et une troisième phase destinée à former un élément de blocage 9 en forme de rondelle à base d'un troisième matériau et dont le trou 8 est plus petit que l'axe 2 de l'organe 3. On comprend que, lors de l'étape a), l'ordre d'exécution des phases n'a aucune importance.

Le procédé se poursuit avec une deuxième étape b) consistant à passer sans contrainte l'axe 2 de l'organe 3 dans l'ouverture 6 de la pièce 5. Cette étape b) est visualisable à la figure 4.

L'étape c) continue le procédé et comporte une première phase destinée à poser l'axe 2 contre le trou 8 de l'élément de blocage 9. Cette première phase de l'étape c) est également visualisable à la figure 4. A cette figure 4, on remarque également un outil 15. Cet outil 15 est préférentiellement plat, c'est-à-dire comporte une surface 14 sensiblement plane destinée à entrer en contact avec la face supérieure 11 de l'élément de blocage 9. On remarque ainsi que si l'élément de blocage 9 est symétrique comme illustré aux figures 1 et 2, les erreurs de montage entre la face supérieure 11 et la face inférieure 12 sont éliminées.

L'étape c) se poursuit avec une deuxième phase destinée à glisser à force l'élément de blocage 9 contre l'axe 2 à l'aide de l'outil 15 afin de déformer l'élément de blocage 9 pour que la partie périphérique 13 de l'élément de blocage 9 soit la plus proche de la pièce 5 comme illustré à la figure 5. On comprend que cette deuxième phase pourrait s'apparenter à un chassage.

Cette déformation intermédiaire élastique, pouvant occasionner des déformations plastiques ponctuelles au niveau de la paroi interne 10, donne l'impression que l'élément de blocage 9 est une rondelle de Belleville. Toutefois, cette géométrie n'est pas stable, c'est-à-dire pas une déformation plastique comme un fluage, et uniquement induite par la force de l'outil 15. Cette déformation intermédiaire élastique est rendue maximale par l'utilisation du trou 8 de l'élément de blocage 9 plus petit que l'axe 2 de l'organe 3 et l'utilisation de l'outil 15 dont la surface 14 est sensiblement plane.

Cette déformation intermédiaire élastique apporte une très grande importance pour le futur système d'assemblage 1 en ce qu'elle applique la future contrainte axiale à la pièce 5 comme illustré à la figure 6, non pas au plus près de l'axe 2 mais, via le bas de levier de largeur L de l'élément de blocage 9, au niveau de la partie périphérique 13 de l'élément de blocage 9. On comprend donc que la section de la portée 4 de l'organe 3 doit également être préférablement sensiblement égale ou supérieure à celle de l'élément de blocage 9 afin de permettre à la partie périphérique 13 d'exercer une force axiale et élastique à l'aplomb de la portée 4 de l'organe 3.

De manière simple, le procédé se termine par l'étape d) consistant à arrêter et retirer l'outil 15 lorsqu'une force prédéfinie et inférieure à la contrainte de limite élastique du troisième matériau, est atteinte entre l'outil 15 et la portée 4 de l'organe 3. En effet, une fois le pincement élastique opéré entre la partie périphérique 13 de l'élément de blocage 9 à l'aplomb de la portée 4 de l'organe 3, l'outil 15 est utilisé pour rapprocher la paroi interne 10 au plus près de la pièce 5 sans dépasser, au niveau de la partie périphérique 13, la contrainte de limite élastique du troisième matériau utilisé pour l'élément de blocage 9.

On comprend donc, qu'une fois l'outil 15 retiré, il n'est pas souhaité que toute la largeur L de la face inférieure 12 de l'élément de blocage 9 exerce une contrainte contre la pièce 5 mais uniquement ou principalement sa partie périphérique 13. La solidarisation de l'ensemble organe 3 - pièce 5 - élément de blocage 9 est donc exercée uniquement ou principalement par une force axiale et élastique de la partie périphérique 13 de l'élément de blocage 9 à l'aplomb de la portée 4 de l'organe 3 conjugué au serrage radial de la paroi interne 10 de l'élément de blocage 9 contre l'axe 2 de l'organe 3.

La figure 3 est une représentation graphique de la force appliquée par l'outil 15 lors du procédé ci-dessus en fonction de la position axiale de l'outil 15. A partir de la flèche A, la deuxième phase de l'étape c) commence comme illustré à la figure 5. A partir de la flèche B, la partie périphérique 13 de l'élément de blocage 9 commence à pincer la pièce 5 comme illustré à la figure 6. A partir de la flèche C, la paroi interne 10 de l'élément de blocage 9 est rapprochée au maximum de la pièce 5 comme illustré à la figure 7 et toute force supplémentaire de l'outil 15 exerce une contrainte interne de l'élément de blocage 9 sans impact sur la géométrie de l'élément de blocage 9.

On comprend donc que les étapes du procédé de fabrication ainsi que les éléments du système d'assemblage sont très simples et faciles à mettre en oeuvre. Ainsi, selon un premier mode de réalisation illustré à la figure 9, il est possible de fixer un spiral 5 sur un axe 2 de balancier, à l'aide d'un système d'assemblage 1 selon l'invention. Pour ce faire, la virole 7 du spiral 5 est solidarisée entre le pivot 3 et l'élément de blocage 9.

Afin de minimiser le risque de déformation plastique de l'élément de blocage 9, 109, 129, 209, l'étape d) est arrêtée lorsque la force appliquée par l'outil 15 est comprise entre 20% et 90% de la contrainte de limite élastique du troisième matériau. Bien entendu, le pourcentage doit être adapté suivant l'application envisagée. Lors des tests, il est apparu que l'arrêt de l'étape d) a donné entière satisfaction lorsque la force appliquée par l'outil 15 est sensiblement égale à 75% de la contrainte de limite élastique du troisième matériau.

Comme expliqué ci-dessus, le montage élastique de l'élément de blocage 9, 109, 129, 209 est avantageusement obtenu en utilisant un troisième matériau qui comporte un métal ou un alliage métallique dont la résistance à la relaxation est au moins égale à 50% de la force appliquée. Les tests permettant de déterminer ce pourcentage ont été effectués après 10000 heures à une température de 70°C et sous une force de 75% de la contrainte nécessaire à obtenir 0,2% de déformation plastique.

La résistance supérieure à 50% a été observée quand le troisième matériau comporte du cuivre, du laiton, du maillechort, de l'alliage arcap, et même supérieure à 85%, quand le troisième matériau comporte de l'alliage pfinodal, de l'alliage spinodal, de l'alliage durnico, de l'alliage durimphy, de l'alliage Cu-Be et de l'acier 20AP.

Pour des considérations propres à l'horlogerie, l'élément de blocage 9, 109, 129, 209 est, de manière encore plus préférée, choisi parmi les matériaux ci-dessus qui ne possèdent pas de matériau ferromagnétique afin d'être peu sensibles aux champs magnétiques, c'est-à-dire le cuivre, le laiton, le maillechort, l'alliage arcap, l'alliage pfinodal, l'alliage spinodal, l'alliage Cu-Be et l'alliage durimphy.

Comme mieux visible aux figures 1 et 2, préférentiellement selon l'invention, la section selon un plan de coupe axial de l'élément de blocage 9, 109, 129, 209 comporte un rapport (H/L) de la hauteur H par rapport à la largeur L compris entre 0,1 et 5. Ainsi, il est important de bien choisir la longueur L pour avoir une partie périphérique 13 suffisamment éloignée du centre de l'axe D pour obtenir un bras de levier suffisamment élevé pour offrir une contrainte suffisante à la solidarisation. Dans le même temps, une hauteur doit être également bien choisie pour avoir une hauteur minimale pour suffisamment protéger le deuxième matériau ne comportant pas ou peu de domaine plastique et une hauteur maximale pour toujours obtenir la déformation intermédiaire expliquée ci-dessous. On comprend donc que le rapport H/L doit être adapté suivant les applications prévues.

Selon une autre préférence, l'élément de blocage 9, 109, 129, 209 est chanfreiné afin d'éviter tout bris du deuxième matériau. En effet, comme expliqué ci-dessus suivant la géométrie de la déformation intermédiaire, un chanfrein peut éviter que l'élément de blocage 9, 109, 129, 209 entre en contact sur la surface supérieure de la pièce 5, 105, 205 par une arête vive propre à générer trop de contrainte sur une surface minimale.

Ainsi, avantageusement selon l'invention, ledit au moins un premier matériau formé pour l'organe 3, 103, 123, 203 peut comporter une grande variété de matériau comme, par exemple, un métal ou un alliage métallique. On comprend donc que l'axe 2, 102, 122, 202 et la portée 4 peuvent être venus de forme à l'aide d'un unique premier matériau ou que l'axe 2, 102, 122, 202 et la portée 4 de l'organe 3, 103, 123, 203 peuvent être formés à partir de plusieurs matériaux et/ou plusieurs parties.

On comprend également que, grâce au procédé selon l'invention, le deuxième matériau ne comportant pas ou peu de domaine plastique peut comporter, notamment, du silicium, du quartz, du corindon, de l'oxyde de silicium, du nitrure de silicium ou carbure de silicium sans risque de bris.

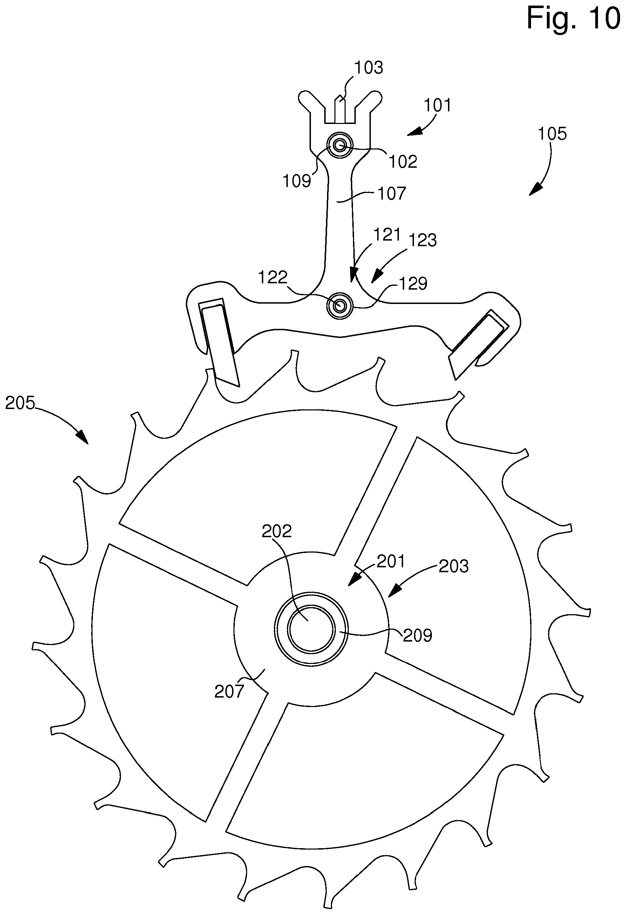

La figure 10 montre d'autres modes de réalisation de systèmes d'assemblage 101, 121, 201 selon l'invention dans le domaine de l'horlogerie. Une ancre 105, à titre d'exemple, peut comporter deux systèmes d'assemblage 101, 121 selon l'invention destinés respectivement à solidariser le dard 103 et la tige 123, avec la baguette 107.

Comme visible à la figure 10, chaque système d'assemblage 101, 121 comporte la baguette 107 qui est solidarisée entre l'axe 102 du dard 103 ou l'axe 122 de la tige 123 et l'élément de blocage 109, 129. On comprend donc que chaque système d'assemblage 101, 121 est suffisamment résistant pour ne pas générer de mouvements relatifs entre ses constituants.

A la même figure, une roue d'échappement, et plus généralement la roue 205, comporte, à titre d'exemple, un système d'assemblage 201 destiné à solidariser un pivot 203, avec la roue 205. Comme visible à la figure 10, le système d'assemblage 201 comporte un moyeu 207 qui est solidarisé entre l'axe 202 du pivot 203 et l'élément de blocage 209.

On comprend donc immédiatement que l'exemple de système d'assemblage 201 peut s'appliquer à tout type de mobile. De plus, l'axe 203 peut comporter en une seule pièce un pignon afin de former un mobile fini.

Bien entendu, la présente invention ne se limite pas à l'exemple illustré mais est susceptible de diverses variantes et modifications qui apparaîtront à l'homme de l'art sans sortir du cadre défini par les revendications annexées. En particulier, l'élément de blocage 9, 109, 129, 209 peut comporter une géométrie différente sans sortir du cadre de l'invention.

L'outil 15 pourrait également comporter une surface 14 sensiblement conique pour suivre sensiblement la forme de rondelle de Belleville obtenue lors de la déformation élastique intermédiaire.

De plus, l'ouverture 6 de la pièce 5, 105, 205 ne saurait se limiter à une forme circulaire et/ou la pièce 5, 105, 205 peut être partiellement ajourée en dessous de l'élément de blocage 9, 109, 129, 209. Ainsi, à titre d'exemple, le spiral 5 de la figure 9 pourrait être remplacé par le spiral 10 comportant une virole 41 dont l'ouverture est sensiblement en forme de trèfle du document EP 2 365 762.

Enfin, d'autres matériaux « fragiles » que ceux à base de silicium ou d'alumine sont envisageables comme, par exemple, des céramiques à base de zirconium ou de titane, ou des verres. L'élément de blocage 9, 109, 129, 209 peut également être formé à base de métaux amorphes également appelés verres métalliques.

## Revendications

1. Système d'assemblage (1, 101, 121, 201) comportant un organe (3, 103, 123, 203) en au moins un premier matériau comportant un axe (2, 102, 122, 202) et une portée (4), l'axe (2, 102, 122, 202) de l'organe (3, 103, 123, 203) étant reçu dans l'ouverture (6) d'une pièce (5, 105, 205) en un deuxième matériau ne comportant pas ou peu de domaine plastique, le système d'assemblage (1, 101, 121, 201) comportant un seul élément de blocage élastique (9, 109, 129, 209) en un troisième matériau agencé pour attacher élastiquement la pièce (5, 105, 205) entre la portée (4) dudit organe et ledit un seul élément de blocage (9, 109, 129, 209) et dans lequel ledit un seul élément de blocage (9, 109, 129, 209) est une rondelle dont la paroi interne (10) serre radialement l'axe (2, 102, 122, 202) dudit organe et dont la partie périphérique (13) exerce une force axiale et élastique à l'aplomb de la portée (4) dudit organe afin de rendre solidaire l'ensemble organe (3, 103, 123, 203) - pièce (5, 105, 205) - élément de blocage (9, 109, 129, 209), la solidarisation de l'ensemble organe (3, 103, 123, 203) - pièce (5, 105, 205) - élément de blocage (9, 109, 129, 209) étant configurée pour exercer à l'aplomb de la portée (4) de l'organe (3, 103, 123, 203) uniquement une force axiale et élastique par la partie périphérique (13) de l'élément de blocage (9, 109, 129, 209) conjuguée au serrage radial de la paroi interne (10) de cet élément de blocage (9, 109, 129, 209) contre l'axe (2, 102, 122, 202) de l'organe (3, 103, 123, 203), l'élément de blocage (9, 109, 129, 209) comprenant une surface n'excédant pas celle de la portée (4) dudit organe.

2. Système d'assemblage (1, 101, 121, 201) selon la revendication précédente, **caractérisé en ce que** le troisième matériau comporte un métal ou un alliage métallique dont la résistance à la relaxation, après 10'000 heures à une température de 70°C, est au moins égale à 50% de la force appliquée représentant 75% de la contrainte nécessaire à obtenir 0,2% de déformation plastique du troisième matériau afin de maintenir la solidarisation de l'ensemble organe (3, 103, 123, 203) - pièce (5, 105, 205) - élément de blocage (9, 109, 129, 209).

3. Système d'assemblage (1, 101, 121, 201) selon la revendication précédente, **caractérisé en ce que** le troisième matériau comporte du cuivre, du laiton, du maillechort, de l'alliage arcap, de l'alliage pfinodal, de l'alliage spinodal, de l'alliage durnico, de l'alliage durimphy, de l'alliage Cu-Be et/ou de l'acier 20AP.

4. Système d'assemblage (1, 101, 121, 201) selon l'une des revendications précédentes, **caractérisé en ce que** ledit un seul élément de blocage (9, 109, 129, 209) est chanfreiné afin d'éviter tout bris du deuxième matériau.

5. Système d'assemblage (1, 101, 121, 201) selon l'une des revendications précédentes, **caractérisé en ce que** le deuxième matériau est à base de silicium.

6. Système d'assemblage (1, 101, 121, 201) selon la revendication précédente, **caractérisé en ce que** le deuxième matériau comporte du silicium, du quartz, de l'oxyde de silicium, du nitrure de silicium ou carbure de silicium.

7. Système d'assemblage (1, 101, 121, 201) selon l'une des revendications précédentes, **caractérisé en ce que** ledit au moins un premier matériau comporte un métal ou un alliage métallique.

8. Système d'assemblage (1, 101, 121, 201) selon l'une des revendications précédentes, **caractérisé en ce que** l'axe (2, 102, 122, 202) et la portée (4) sont venus de forme.

9. Pièce d'horlogerie **caractérisée en ce qu'**elle comporte au moins un système d'assemblage (1, 101, 121, 201) selon l'une des revendications précédentes.

10. Pièce d'horlogerie selon la revendication précédente, **caractérisée en ce que** la pièce en un deuxième matériau est un mobile (205), une ancre (105) ou un spiral (5).

11. Procédé de fabrication d'un système d'assemblage (1, 101, 121, 201) comportant les étapes suivantes :
a) former un organe (3, 103, 123, 203) en au moins un premier matériau comportant un axe (2, 102, 122, 202) et une portée (4), une pièce (5, 105, 205) en deuxième matériau ne comportant pas ou peu de domaine plastique avec une ouverture (6) et un seul élément de blocage (9, 109, 129, 209) en forme de rondelle à base d'un troisième matériau, ladite rondelle comportant une paroi interne (10) et dont le trou (8) est plus petit que l'axe (2, 102, 122, 202) dudit organe, la surface dudit un seul élément de blocage (9, 109, 129, 209) n'excédant pas celle de la portée (4) dudit organe ;
b) passer sans contrainte l'axe (2, 102, 122, 202) dudit organe dans l'ouverture (6) de la pièce (5, 105, 205) ;
c) poser l'axe (2, 102, 122, 202) contre le trou (8) dudit un seul élément de blocage (9, 109, 129, 209) et glisser à force ledit un seul élément de blocage (9, 109, 129, 209) contre l'axe (2, 102, 122, 202) à l'aide d'un outil (15) afin de déformer élastiquement ledit un seul élément de blocage (9, 109, 129, 209) pour que la partie périphérique (13) dudit un seul élément de blocage (9, 109, 129, 209) soit la plus proche de la pièce (5, 105, 205) ;
d) arrêter et retirer ledit outil lorsqu'une force prédéfinie et inférieure à la contrainte de limite élastique du troisième matériau, est atteinte entre l'outil (15) et la portée (4) dudit organe, de manière à rendre solidaire l'ensemble organe (3, 103, 123, 203) - pièce (5, 105, 205) - élément de blocage (9, 109, 129, 209) par uniquement une force axiale et élastique de l'élément de blocage exercée l'aplomb de la portée (4), ladite force étant conjuguée au serrage radial de la paroi interne (10) de l'élément de blocage (9, 109, 129, 209) contre l'axe (2, 102, 122, 202) de l'organe (3, 103, 123, 203).

12. Procédé de fabrication selon la revendication précédente, **caractérisé en ce que** l'étape d) est arrêtée lorsque la force appliquée par ledit outil est comprise entre 20% et 90% de la contrainte de limite élastique du troisième matériau.

13. Procédé de fabrication selon la revendication 11 ou 12, **caractérisé en ce que** le troisième matériau comporte un métal ou un alliage métallique dont la résistance à la relaxation, après 10'000 heures à une température de 70°C, est au moins égale à 50% de la force appliquée lors de l'étape d) représentant 75% de la contrainte nécessaire à obtenir 0,2% de déformation plastique du troisième matériau afin de maintenir la solidarisation de l'ensemble organe (3, 103, 123, 203) - pièce (5, 105, 205) - élément de blocage (9, 109, 129, 209).

14. Procédé de fabrication selon la revendication précédente, **caractérisé en ce que** le troisième matériau comporte du cuivre, du laiton, du maillechort, de l'alliage arcap, de l'alliage pfinodal, de l'alliage spinodal, de l'alliage durnico, de l'alliage durimphy, de l'alliage Cu-Be et/ou de l'acier 20AP.

15. Procédé de fabrication selon l'une des revendications 11 à 14, **caractérisé en ce que** ledit un seul élément de blocage (9, 109, 129, 209) est chanfreiné afin d'éviter tout bris du deuxième matériau.

16. Procédé de fabrication selon l'une des revendications 11 à 15, **caractérisé en ce que** le deuxième matériau est à base de silicium.

17. Procédé de fabrication selon la revendication précédente, **caractérisé en ce que** le deuxième matériau comporte du silicium, du quartz, de l'oxyde de silicium, du nitrure de silicium ou carbure de silicium.

18. Procédé de fabrication selon l'une des revendications 11 à 17, **caractérisé en ce que** ledit au moins premier matériau comporte un métal ou un alliage métallique.

19. Procédé de fabrication selon l'une des revendications 11 à 18, **caractérisé en ce que** la pièce est un mobile d'horlogerie (205).

20. Procédé de fabrication selon l'une des revendications 11 à 18, **caractérisé en ce que** la pièce est une ancre d'horlogerie (105).

21. Procédé de fabrication selon l'une des revendications 11 à 18, **caractérisé en ce que** la pièce est un spiral d'horlogerie (5).

## Patentansprüche

1. Montagesystem (1, 101, 121, 201), das ein Organ (3, 103, 123, 203) aus mindestens einem ersten Material aufweist, das eine Welle (2, 102, 122, 202) und eine Auflagefläche (4) aufweist, wobei die Welle (2, 102, 122, 202) des Organs (3, 103, 123, 203) in der Öffnung (6) eines Teils (5, 105, 205) aus einem zweiten Material aufgenommen ist, das keinen oder wenig Kunststoffbereich aufweist, wobei das Montagesystem (1, 101, 121, 201) ein einziges elastisches Blockierelement (9, 109, 129, 209) aus einem dritten Material aufweist, das eingerichtet ist, um das Teil (5, 105, 205) zwischen der Auflagefläche (4) des Organs und dem einen einzigen Blockierelement (9, 109, 129, 209) elastisch zu spannen und wobei das eine einzige Blockierelement (9, 109, 129, 209) eine Scheibe ist, deren Innenwand (10) die Welle (2, 102, 122, 202) des Organs radial umspannt und deren peripherer Abschnitt (13) eine axiale und elastische Kraft lotrecht auf die Auflagefläche (4) des Organs ausübt, um die Anordnung Organ (3, 103, 123, 203) - Teil (5, 105, 205) - Blockierelement (9, 109, 129, 209) fest zu verbinden, wobei die feste Verbindung der Anordnung Organ (3, 103, 123, 203) - Teil (5, 105, 205) - Blockierelement (9, 109, 129, 209) dazu ausgelegt ist, lotrecht auf die Auflagefläche (4) des Organs (3, 103, 123, 203) nur eine axiale und elastische Kraft durch den peripheren Teil (13) des Blockierelements (9, 109, 129, 209) gemeinsam mit der radialen Spannung der Innenwand (10) dieses Blockierelements (9, 109, 129, 209) gegen die Welle (2, 102, 122, 202) des Organs (3, 103, 123, 203) auszuüben, wobei das Blockierelement (9, 109, 129, 209) eine Oberfläche hat, welche diejenige der Auflagefläche (4) des Organs nicht überschreitet.

2. Montagesystem (1, 101, 121, 201) nach vorangehendem Anspruch, **dadurch gekennzeichnet, dass** das dritte Material ein Metall oder eine Metalllegierung aufweist, dessen/deren Relaxationsbeständigkeit nach 10 000 Stunden bei einer Temperatur von 70 °C mindestens gleich 50 % der angewendeten Kraft entspricht, die 75 % der Belastung darstellt, die notwendig ist, um 0,2 % plastische Verformung des dritten Materials zu erhalten, um die feste Verbindung der Anordnung Organ (3, 103, 123, 203) - Teil (5, 105, 205) - Blockierelement (9, 109, 129, 209) aufrechtzuerhalten.

3. Montagesystem (1, 101, 121, 201) nach vorangehendem Anspruch, **dadurch gekennzeichnet, dass** das dritte Material Kupfer, Messing, Neusilber, Arcaplegierung, Pfinodallegierung, Spinodallegierung, Durnicolegierung, Durimphylegierung, Cu-Be-Legierung und/oder Stahl 20AP aufweist.

4. Montagesystem (1, 101, 121, 201) nach einem der vorangehenden Ansprüche, **dadurch gekennzeichnet, dass** das eine einzige Blockierelement (9, 109, 129, 209) angefast ist, um jedweden Bruch des zweiten Materials zu vermeiden.

5. Montagesystem (1, 101, 121, 201) nach einem der vorangehenden Ansprüche, **dadurch gekennzeichnet, dass** das zweite Material auf der Basis von Silizium ist.

6. Montagesystem (1, 101, 121, 201) nach vorangehendem Anspruch, **dadurch gekennzeichnet, dass** das zweite Material Silizium, Quarz, Siliziumoxid, Siliziumnitrid oder Siliziumcarbid aufweist.

7. Montagesystem (1, 101, 121, 201) nach einem der vorangehenden Ansprüche, **dadurch gekennzeichnet, dass** das mindestens eine erste Material ein Metall oder eine Metalllegierung aufweist.

8. Montagesystem (1, 101, 121, 201) nach einem der vorangehenden Ansprüche, **dadurch gekennzeichnet, dass** die Welle (2, 102, 122, 202) und die Auflagefläche (4) integral geformt sind.

9. Uhr, **dadurch gekennzeichnet, dass** sie mindestens ein Montagesystem (1, 101, 121, 201) nach einem der vorangehenden Ansprüche aufweist.

10. Uhr nach vorangehendem Anspruch, **dadurch gekennzeichnet, dass** das Teil aus einem zweiten Material ein Drehteil (205), ein Anker (105) oder eine Spirale (5) ist.

11. Verfahren zur Herstellung eines Montagesystems (1, 101, 121, 201), das die folgenden Schritte aufweist:
a) Bilden eines Organs (3, 103, 123, 203) aus mindestens einem ersten Material, das eine Welle (2, 102, 122, 202) und eine Auflagefläche (4) aufweist, eines Teils (5, 105, 205) aus zweitem Material, das keinen oder wenig Kunststoffbereich aufweist mit einer Öffnung (6) und eines einzigen Blockierelements (9, 109, 129, 209) in Scheibenform auf der Basis eines dritten Materials, wobei die Scheibe eine Innenwand (10) aufweist und deren Loch (8) kleiner als die Welle (2, 102, 122, 202) des Organs ist, wobei die Oberfläche des einen einzigen Blockierelements (9, 109, 129. 209) diejenige der Auflagefläche (4) des Organs nicht überschreitet;
b) belastungsfreies Einführen der Welle (2, 102, 122, 202) des Organs in die Öffnung (6) des Teils (5, 105, 205);
c) Positionieren der Welle (2, 102, 122, 202) am Loch (8) des einen einzigen Blockierelements (9, 109, 129, 209) und Gleiten des einen einzigen Blockierelements (9, 109, 129, 209) durch Kraft gegen die Welle (2, 102, 122, 202) mit Hilfe eines Werkzeugs (15), um das eine einzige Blockierelement (9, 109, 129, 209) elastisch zu verformen, damit der periphere Abschnitt (13) des einen einzigen Blockierelements (9, 109, 129, 209) der dem Teil (5, 105, 205) Nächste ist;
d) Stoppen und Entfernen des Werkzeugs, wenn eine vorbestimmte Kraft unterhalb der elastischen Grenzbeanspruchung des dritten Materials zwischen dem Werkzeug (15) und der Auflagefläche (4) des Organs erreicht ist, so das die Anordnung Organ (3, 103, 123, 203) - Teil (5, 105, 205) - Blockierelement (9, 109, 129, 209) nur durch eine axiale und elastische Kraft des Blockierelements, die lotrecht auf die Auflagefläche (4) ausgeübt wird, fest verbunden wird, wobei die Kraft gemeinsam mit der radialen Spannung der Innenwand (10) des Blockierelements (9, 109, 129, 209) gegen die Achse (2, 102, 122, 202) des Organs (3, 103, 123, 203) ausgeübt wird.

12. Herstellungsverfahren nach vorangehendem Anspruch, **dadurch gekennzeichnet, dass** der Schritt d) gestoppt wird, wenn die von dem Werkzeug ausgeübte Kraft zwischen 20 % und 90 % der elastischen Grenzbeanspruchung des dritten Materials liegt.

13. Herstellungsverfahren nach Anspruch 11 oder 12, **dadurch gekennzeichnet, dass** das dritte Material ein Metall oder eine Metalllegierung aufweist, dessen/deren Relaxationsbeständigkeit nach 10 000 Stunden bei einer Temperatur von 70 °C mindestens gleich 50 % der bei Schritt d) angewendeten Kraft entspricht, die 75 % der Belastung darstellt, die notwendig ist, um 0,2 % plastische Verformung des dritten Materials zu erhalten, um die feste Verbindung der Anordnung Organ (3, 103, 123, 203) - Teil (5, 105, 205) - Blockierelement (9, 109, 129, 209) aufrechtzuerhalten.

14. Herstellungsverfahren nach vorangehendem Anspruch, **dadurch gekennzeichnet, dass** das dritte Material Kupfer, Messing, Neusilber, Arcaplegierung, Pfinodallegierung, Spinodallegierung, Durnicolegierung, Durimphylegierung, Cu-Be-Legierung und/oder Stahl 20AP aufweist.

15. Herstellungsverfahren nach einem der Ansprüche 11 bis 14, **dadurch gekennzeichnet, dass** das eine einzige Blockierelement (9, 109, 129, 209) angefast ist, um jedweden Bruch des zweiten Materials zu vermeiden.

16. Herstellungsverfahren nach einem der Ansprüche 11 bis 15, **dadurch gekennzeichnet, dass** das zweite Material auf der Basis von Silizium ist.

17. Herstellungsverfahren nach vorangehendem Anspruch, **dadurch gekennzeichnet, dass** das zweite Material Silizium, Quarz, Siliziumoxid, Siliziumnitrid oder Siliziumcarbid aufweist.

18. Herstellungsverfahren nach einem der Ansprüche 11 bis 17, **dadurch gekennzeichnet, dass** das mindestens erste Material ein Metall oder eine Metalllegierung aufweist.

19. Herstellungsverfahren nach einem der Ansprüche 11 bis 18, **dadurch gekennzeichnet, dass** das Teil ein Uhrendrehteil (205) ist.

20. Herstellungsverfahren nach einem der Ansprüche 11 bis 18, **dadurch gekennzeichnet, dass** das Teil ein Uhrenanker (105) ist.

21. Herstellungsverfahren nach einem der Ansprüche 11 bis 18, **dadurch gekennzeichnet, dass** das Teil eine Uhrenspirale (5) ist.

## Claims

1. Assembly system (1, 101, 121, 201) including a member (3, 103, 123, 203) made of at least a first material including a staff (2, 102, 122, 202) and a shoulder (4), the staff (2, 102, 122, 202) of the member (3, 103, 123, 203) being received in the aperture (6) of a part (5, 105, 205) made of a second material, including no or a few plastic domain, the assembly system (1, 101, 121, 201) including one single elastic locking element (9, 109, 129, 209) made of a third material arranged to elastically attach the part (5, 105, 205) between the shoulder (4) of said member and said one single locking element (9, 109, 129, 209), and wherein said one single locking element (9, 109, 129, 209) is a washer whose internal wall (10) radially grips the staff (2, 102, 122, 202) of said member and whose peripheral portion (13) exerts an elastic axial force vertical to the shoulder (4) of said member in order to secure the member (3, 103, 123, 203) - part (5, 105, 205) - locking element (9, 109, 129, 209) assembly, the secure assembly of the member (3, 103, 123, 203) - part (5, 105, 205) - locking element (9, 109, 129, 209) being configured to exert only an elastic axial force vertical to the shoulder (4) of the member (3, 103, 123, 203) by the peripheral portion (13) of the locking element (9, 109, 129, 209) conjugate with the radial gripping of the internal wall (10) of this locking element (9, 109, 129, 209) against the staff (2, 102, 122, 202) of the member (3, 103, 123, 203), the locking element (9, 109, 129, 209) including a surface that is not larger than that of the shoulder (4) of said member.

2. Assembly system (1, 101, 121, 201) according to the preceding claim, **characterised in that** the third material includes a metal or a metal alloy whose resistance to relaxation, after 10,000 hours at a temperature of 70°C is equal to at least 50% of the applied force representing 75% of the stress necessary to obtain 0.2% plastic deformation of the third material in order to maintain the secure assembly of the member (3, 103, 123, 203) - part (5, 105, 205) - locking element (9, 109, 129, 209).

3. Assembly system (1, 101, 121, 201) according to the preceding claim, **characterised in that** the third material includes copper, brass, nickel silver, ARCAP alloy, Pfinodal alloy, Spinodal alloy, Durnico alloy, Durimphy alloy, Cu-Be alloy and/or 20AP steel.

4. Assembly system (1, 101, 121, 201) according to one of the preceding claims, **characterised in that** said one single locking element (9, 109, 129, 209) is chamfered to prevent any breakage of the second material.

5. Assembly system (1, 101, 121, 201) according to one of the preceding claims, **characterised in that** the second material is silicon-based.

6. Assembly system (1, 101, 121, 201) according to the preceding claim, **characterised in that** the second material includes silicon, quartz, silicon oxide, silicon nitride or silicon carbide.

7. Assembly system (1, 101, 121, 201) according to one of the preceding claims, **characterised in that** said at least one first material includes a metal or a metal alloy.

8. Assembly system (1, 101, 121, 201) according to one of the preceding claims, **characterised in that** the staff (2, 102, 122, 202) and the shoulder (4) are in a single piece.

9. Timepiece **characterised in that** it includes at least one assembly system (1, 101, 121, 201) according to one of the preceding claims.

10. Timepiece according to the preceding claim, **characterised in that** the part made of a second material is a wheel set (205), pallets (105) or a balance spring (5).

11. Method of manufacturing an assembly system (1, 101, 121, 201) comprising the following steps:
a) forming a member (3, 103, 123, 203) made of at least a first material including a staff (2, 102, 122, 202) and a shoulder (4), a part (5, 105, 205) made of a second material, including no or a few plastic domain with an aperture (6) and a locking element (9, 109, 129, 209) in the form of a washer made from a third material, said washer including an internal wall (10) and whose hole (8) is smaller than the staff (2, 102, 122, 202) of said member, the surface of said one single locking element (9, 109, 129, 209) being not larger than that of the shoulder (4) of said member;
b) passing the staff (2, 102, 122, 202) of said member freely into the aperture (6) of the part (5, 105, 205);
c) placing the staff (2, 102, 122, 202) against the hole (8) in said one single locking element (9, 109, 129, 209) and forcibly sliding said one single locking element (9, 109, 129, 209) against the staff (2, 102, 122, 202) using a tool (15) to elastically deform said one single locking element (9, 109, 129, 209) so that the peripheral portion (13) of said one single locking element (9, 109, 129, 209) is the closest to the part (5, 105, 205);
d) stopping and removing said tool when a predefined force less than the yield strength of the third material is reached between the tool (15) and the shoulder (4) of said member, so as to ensure the secure assembly of the member (3, 103, 123, 203) - part (5, 105, 205) - locking element (9, 109, 129, 209) only by an elastic axial force of the locking element exerted vertical to the shoulder (4), said force being conjugate with the radial gripping of the internal wall (10) of the locking element (9, 109, 129, 209) against the staff (2, 102, 122, 202) of the member (3, 103, 123, 203).

12. Manufacturing method according to the preceding claim, **characterised in that** step d) is stopped when the force applied by said tool is comprised between 20% and 90% of the yield strength of the third material.

13. Manufacturing method according to claim 11 or 12, **characterised in that** the third material includes a metal or a metal alloy whose resistance to relaxation, after 10,000 hours at a temperature of 70°C is equal to at least 50% of the force applied in step d) representing 75% of the stress necessary to obtain 0.2% plastic deformation of the third material in order to maintain the secure assembly of the member (3, 103, 123, 203) - part (5, 105, 205) - locking element (9, 109, 129, 209).

14. Manufacturing method according to the preceding claim, **characterised in that** the third material includes copper, brass, nickel silver, ARCAP alloy, Pfinodal alloy, Spinodal alloy, Durnico alloy, Durimphy alloy, Cu-Be alloy and/or 20AP steel.

15. Manufacturing method according to one of claims 11 to 14, **characterised in that** said one single locking element (9, 109, 129, 209) is chamfered to prevent any breakage of the second material.

16. Manufacturing method according to one of claims 11 to 15, **characterised in that** the second material is silicon-based.

17. Manufacturing method according to the preceding claim, **characterised in that** the second material includes silicon, quartz, silicon oxide, silicon nitride or silicon carbide.

18. Manufacturing method according to one of claims 11 to 17, **characterised in that** said at least first material includes a metal or a metal alloy.

19. Manufacturing method according to one of claims 11 to 18, **characterised in that** the part is a timepiece wheel set (205).

20. Manufacturing method according to one of claims 11 to 18, **characterised in that** the part is pallets (105) of a timepiece.

21. Manufacturing method according to one of claims 11 to 18, **characterised in that** the part is a timepiece balance spring (5).
